# EUROPÄISCHE PATENTANMELDUNG

(11) **EP 2 538 032 A1**
(43) Veröffentlichungstag der Anmeldung: **26.12.2012**
(21) Anmeldenummer: 11170932.5
(22) Anmeldetag: 22.06.2011
(51) Int. Cl.: F01D 11/02, F16J 15/44, F16J 15/447

(54) **Radialbewegliches Dichtsystem für eine Gasturbine**

(71) Anmelder: SIEMENS AKTIENGESELLSCHAFT, 80333 München (DE)
(72) Erfinder: Schröder, Peter, 45307 Essen (DE)

(57) **Zusammenfassung**

Die Erfindung betrifft ein Dichtsystem (50) für eine Gasturbine (10), mit einem Stator (53) und einem Rotor (14), die einen Ringspalt bildend axial überlappen und dort zumindest eine Labyrinthdichtung mit einem rotorseitigen Dichtungspartner (46,48) und einem statorseitigen Dichtungspartner (56) aufweisen, wobei der rotorseitige Dichtungspartner im Überlappungsabschnitt zumindest eine sich in Umfangsrichtung erstreckende Dichtspitze (60) aufweist. Um eine besonders langlebige und einfach wiederaufbereitbare Labyrinthdichtung anzugeben, ist vorgesehen, dass die Dichtspitze (60) am Rotor (14) radial beweglich gelagert ist.

## Beschreibung

Die Erfindung betrifft ein Dichtsystem für eine Gasturbine, mit einem Rotor und einem diesen umgebenden Stator, die einen Ringspalt bildend axial überlappen und dort zumindest eine Labyrinthdichtung mit einem rotorseitigen Dichtungspartner und einem statorseitigen Dichtungspartner zur Abdichtung des Ringspalts aufweist, wobei der rotorseitige Dichtungspartner zumindest eine sich in Umfangsrichtung erstreckende Dichtspitze aufweist.

Ein gattungsgemäßes Dichtsystem mit einer Labyrinthdichtungen zur Abdichtung des Ringspalts ist beispielsweise aus der EP 0 894 947 B1 bekannt. Der äußere Teil der Labyrinthdichtung ist feststehend und wird von der nach innen gewandten wabenförmigen Fläche eines sogenannten U-Rings gebildet. Der innere, rotierende Teil der Labyrinthdichtung ist an der jeweiligen mantelseitigen Fläche von Dichtungsarmabschnitten, die an Rotorscheiben angeordnet sind, als endlos umlaufende Dichtspitze ausgebildet. Im Betrieb schneiden sich die Dichtspitzen in die wabenförmige, nach innen weisende Fläche des U-Rings ein und verhindern somit eine Leckageströmung durch die entsprechenden Ringspalte zwischen dem U-Ring und den Dichtungsarmabschnitten. Diese Anordnung ist jedoch sehr verschleißanfällig, da im Betrieb die Dichtspitze dauerhaft sich gegenüber dem U-Ring dreht. Eine ähnliche Anordnung ist zudem aus US 2010/0196139 A1 bekannt.

Eine alternative Anordnung eines Dichtsystems umfassend zwei aneinander liegende Rotorscheiben ist beispielsweise aus der JP 09-242505 A bekannt. Darin sind unterschiedliche Konstruktionen von Dichtungen zur Abdichtung eines Rotorinnenraums gegenüber einem Außenraum gezeigt. Die gezeigten Dichtungen verschließen einen die beiden Räume ansonsten verbindenden Spalt, welcher im Wesentlichen zwischen zwei einander gegenüberliegenden Dichtungsarmabschnitten angeordnet ist.

Es hat sich herausgestellt, dass weiterhin Bedarf an einer zuverlässigen Dichtung zur Trennung der Räume besteht. Der Bedarf ergibt sich einerseits aufgrund gesteigerter Anforderungen an die Lebensdauer des Dichtelements und andererseits an eine erhöhte Dichtigkeitsanforderung, da aufgrund steigender Druckverhältnisse von Verdichtern stationärer Gasturbinen im Innern des Rotors höhere Drücke an Kühlluft zur Kühlung von Turbinenschaufeln bereitstehen. Somit tritt ein größeres Druckgefälle gegenüber dem Außenraum auf, der durch die Dichtungsarmabschnitte und dem Dichtsystem von dem inneren Rotorraum zu trennen ist.

Aufgabe der Erfindung ist die Bereitstellung eines Dichtsystems für eine stationäre Gasturbine, welches eine verlängerte Lebensdauer unter weiterer Erhöhung der Dichtungswirkung aufweist.

Die der Erfindung zugrundeliegende Aufgabe wird mit einem Dichtsystem gemäß den Merkmalen des Anspruchs 1 gelöst. Vorteilhafte Ausgestaltungen der Erfindung und weiterführende Merkmale sind in den abhängigen Ansprüchen angegeben.

Erfindungsgemäß ist die Dichtspitze am Rotor radial beweglich gelagert. Mit anderen Worten: die Dichtspitze ist als Kolbenring ausgestaltet, die am Rotor radial beweglich und somit unter Fliehkrafteinwirkung nach außen strebend angeordnet ist. Durch die radiale Beweglichkeit wird erreicht, dass der Radialspalt zwischen Dichtspitze und gegenüberliegenden statorseitigen Dichtfläche oder einer honigwabenförmigen Struktur erst unter Fliehkraft minimal wird. Da Stator und Rotor im transienten Betrieb sich thermisch unterschiedlich ausdehnen und sich dabei in nicht vorhersehbarer Weise relativ zueinander bewegen, können die währenddessen auftretenden unterschiedlich großen Radialspalte aufgrund der Radialbeweglichkeit der Dichtspitze kompensiert werden, ohne dass eine Beschädigung der Dichtungspartner auftritt. Dadurch erzielt die Labyrinthdichtung für eine besonders lange Lebensdauer eine besonders hohe Dichtwirkung.

Gemäß einer ersten vorteilhaften Ausgestaltung ist die Dichtspitze in einer in einer Rotormantelfläche angeordneten Nut eingebracht. Hierdurch weist die Dichtspitze eine axiale Führung auf, so dass eine definierte axiale Position der Dichtspitze stets gegeben ist.

Gemäß einer besonders bevorzugten Ausgestaltung der Erfindung ist die Nut schwalbenschwanzförmig ausgebildet und die Dichtspitze nutseitig dazu korrespondierend ausgestaltet. Mit anderen Worten: die Dichtspitze sitzt in der Nut und wird trotz einer auf die Dichtspitze einwirkenden Fliehkraft von der Nut gehalten, so dass eine maximale äußere Position durch die Abstimmung der Nutgeometrie und der nutseitigen Dichtspitzengeometrie vorgegeben ist. Dies verhindert einen unzulässigen bzw. ungewünscht intensiven Kontakt der Dichtspitze mit der ihr gegenüberliegenden Dichtfläche des Stators, was Verschleiß reduziert oder gar vermeidet. Des Weiteren ermöglicht die formschlüssige Verbindung der Dichtspitze mit der Nut und damit mit dem Rotor, dass die Dichtspitze nicht zwingend als einstückiger Ring ausgestaltet sein muss. Vielmehr kann die Dichtspitze auch von einer Vielzahl von bogenförmigen Segmenten gebildet werden, die vorzugsweise an ihren Enden jeweils geringfügig in Tangentialrichtung überlappen. Letzteres gewährleistet einen geschlossenen Ring von Segmenten.

Um dauerhaft den geschlossenen Ring bereitstellen zu können, sind die einzelnen Dichtspitzensegmente jeweils mit Hilfe eines Bolzens gegen eine Tangentialverschiebung gegenüber dem Rotor gesichert.

Für den Fall, dass die Dichtspitzen verschleißen, können diese aufgrund ihrer modularen Ausgestaltung während Wartungsarbeiten vergleichsweise einfach erneuert werden, ohne dass dazu der Rotor zerlegt oder aufwändig, beispielsweise durch Auftragsschweißen und anschließendem Abdrehen von überflüssigem Dichtspitzenmaterial, aufbereitet werden muss. Dafür ist eine seitlich der Nut angeordnete Einführöffnung an der Mantelfläche des Rotors vorgesehen, dessen mit einer geringen Steigung versehener Kanal in der die Dichtspitzensegmente aufnehmenden Nut mündet.

Eine weitere besonders bevorzugte Ausgestaltung der Erfindung betrifft einen Rotor, welcher im Überlappungsabschnitt zwei axial aneinander liegende Rotorkomponenten - vorzugsweise Rotorscheiben - mit jeweils einen auf die gegenüberliegende Rotorkomponente gerichteten Dichtungsarmabschnitt aufweist, wobei an jedem Dichtungsarmabschnitt zumindest ein radial beweglicher Dichtspitzenring angeordnet ist. In diesem Fall ist es möglich, einen Rotorinnenraum besonders effizient mit Hilfe des Stators gegenüber einem Seitenraum abzudichten, ohne dass unzulässig hohe Leckagen an Kühlluft durch den Spalt zwischen Rotor und Stator auftreten. Dies ist insbesondere bei einer Gasturbine von Vorteil, die dadurch einen erhöhten Wirkungsgrad aufweist.

Weitere Vorteile und Merkmale der Erfindung werden in einer nachfolgend beschriebenen Ausführungsform näher erläutert. Es zeigen:
- Figur 1: eine zur Stromerzeugung vorgesehene, stationäre Gasturbine in einem Längsteilschnitt,
- Figur 2: einen Ausschnitt aus Figur 1 mit zwei einander gegenüberliegenden Rotorscheiben und einem jeweils daran seitlich angeordneten Dichtungsarmabschnitt,
- Figur 3: ein Dichtsystem gemäß der Erfindung im betriebslosen Zustand,
- Figur 4: das Dichtsystem im Betriebszustand,
- Figur 5: die Seitenansicht auf ein Dichtspitzensegment und
- Figur 6: den Querschnitt durch den Rotor mit einer Einführöffnung für Dichtspitzensegmente.

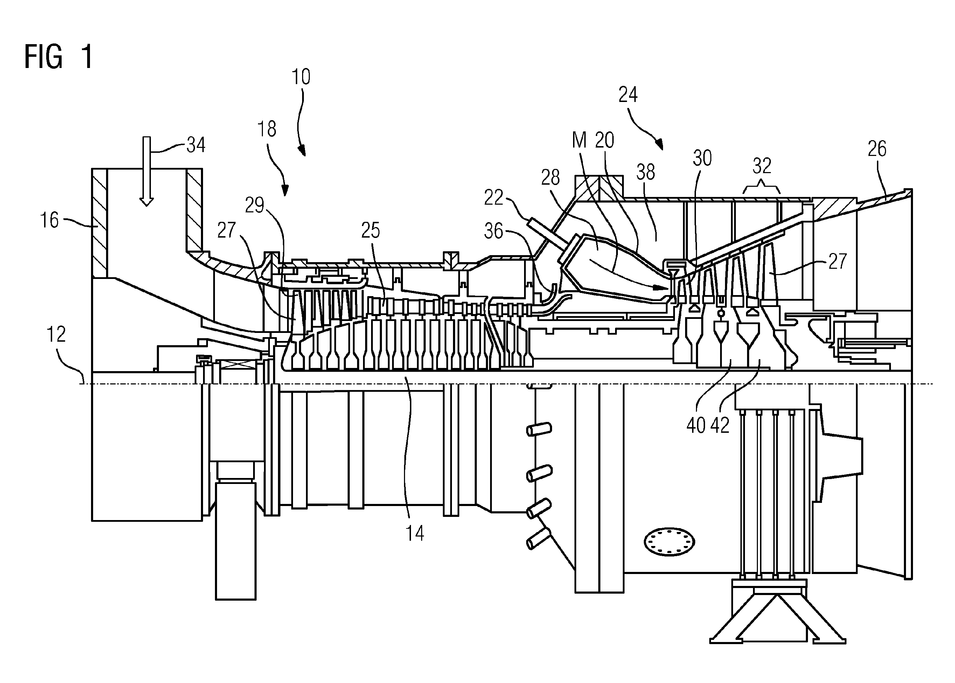

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand des Verdichterkanals 25 gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

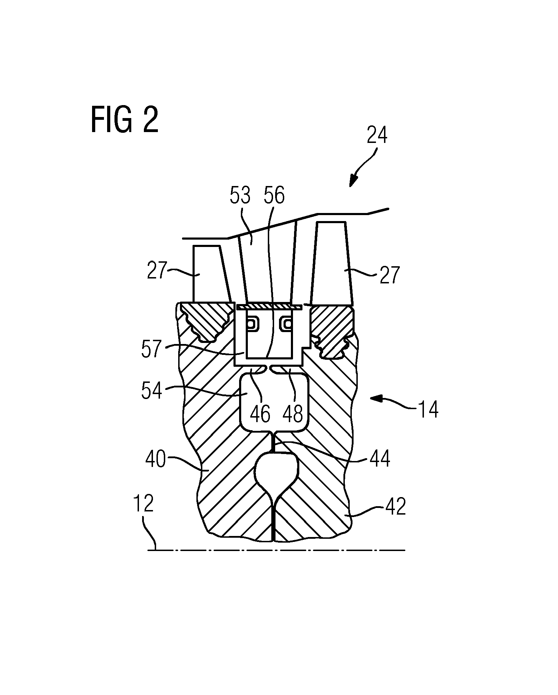

Figur 2 zeigt einen axialen Abschnitt aus dem Längsschnitt der Gasturbine 10 im Bereich der Turbineneinheit 24. Zwei axial aneinander liegende Rotorscheiben 40, 42 bilden jeweils eine Rotorkomponente. Die Rotorscheiben 40, 42 sind aufgrund einer nicht weiter dargestellten Verschraubung in einem Kontaktbereich 44 formschlüssig, flächig und mit großer Kraft aneinander gepresst, um eine schlupffreie Übertragung von Drehmomenten zu gewährleisten. Die Rotorscheiben 40, 42 sind im Wesentlichen zur Rotationsachse 12 symmetrisch ausgestaltet, abgesehen vom Bereich der Laufschaufelaufnahmen.

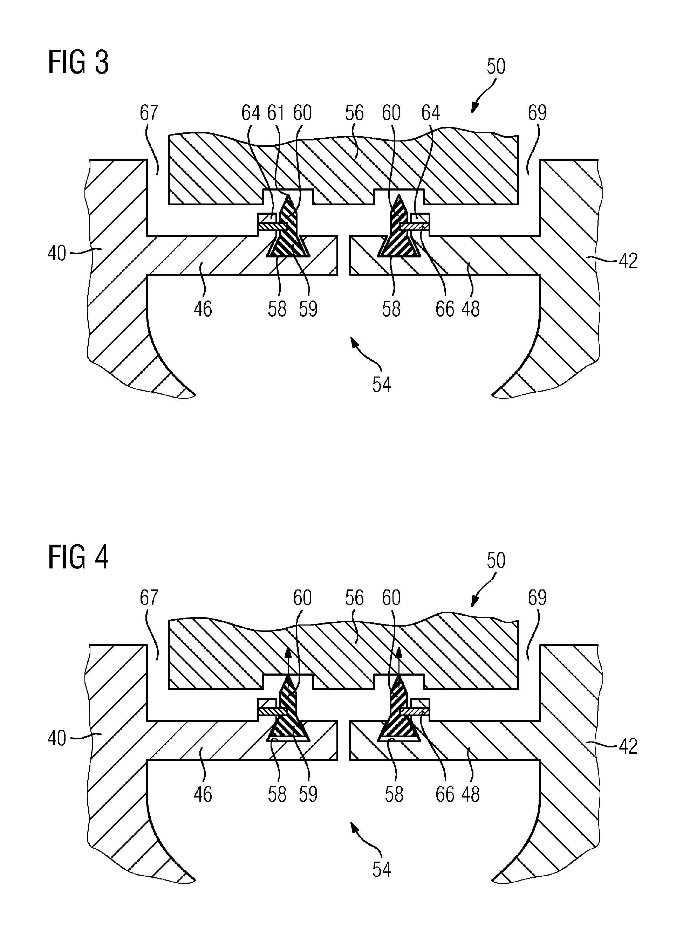

Radial weiter außen zur Kontaktfläche 44 weist jede Rotorscheibe 40, 42 einen seitlich angeordneten, ringförmigen Dichtungsarmabschnitt 46, 48 auf, der jeweils auf die gegenüberliegende andere Rotorscheibe 40, 42 gerichtet ist. Die Dichtungsarmabschnitte 46, 48 sind als Kragen ausgebildet, die in Tangentialrichtung endlos umlaufen. Radial innerhalb der beiden Dichtungsarmabschnitte 46, 48 ist ein Rotorinnenraum 54 vorgesehen, in dem während des Betriebs der Gasturbine 10 Kühlluft mit hohem Druck auftritt. Diese wird durch nicht weiter dargestellte Bohrungen, welche in den Rotorscheiben 40, 42 angesiedelt sind, zu den Füßen von in Kränzen angeordneten Laufschaufeln 27 geführt. Anschließend wird die Kühlluft durch das Schaufelinnere zu einem Schaufelblatt geleitet. Dort kühlt es das dem Heißgas ausgesetzte Schaufelblatt. Axial zwischen den Laufschaufeln 27 sind ebenfalls in einem Kranz angeordnete Leitschaufeln 53 vorgesehen, die über einen U-Ring 56 radial innen miteinander gekoppelt sind. Der U-Ring ist Teil eines Stators der Gasturbine 10 und ist in einem sogenannten Scheibenzwischenraum 57 angeordnet, welcher außerhalb des Rotors 14 der Gasturbine 10 liegt. Der Scheibenzwischenraum 57 ist dabei durch den U-Ring 56 in zwei Seitenräume 67, 69 (Figuren 3, 4) unterteilt. Die erfindungsgemäße Ausgestaltung ist in Figur 2 nicht dargestellt.

Figur 3 zeigt ein Dichtsystem 50 für die Gasturbine 10 mit dem den U-Ring 56 aufweisenden Stator und dem von den beiden Dichtungsarmabschnitten 46, 48 der Rotorscheiben 40, 42 gebildeten Rotor 14. An den äußeren Umfangsflächen der Dichtungsarmabschnitte 46, 48 ist jeweils eine im Längsschnitt schwalbenschwanzförmige Nut 58 eingebracht. Jede Nut 58 ist endlos umlaufend. In diesen Nuten 58 sind radial bewegliche Dichtspitzen 60 als rotorseitige Dichtungspartner des Dichtsystems 50 angesiedelt, deren nutseitiger Abschnitt 59 auf die Schwalbenschwanzform der Nut 58 abgestimmt ist. Die Schwalbenschwanzform der Dichtspitze 60 und die Schwalbenschwanzform der Nut 58 sind geometrisch so aufeinander abgestimmt, dass die Dichtspitze 60 in der Nut 58 radial beweglich sitzt, wobei die radiale Beweglichkeit aufgrund der abgestimmten Formen nach außen begrenzt ist.

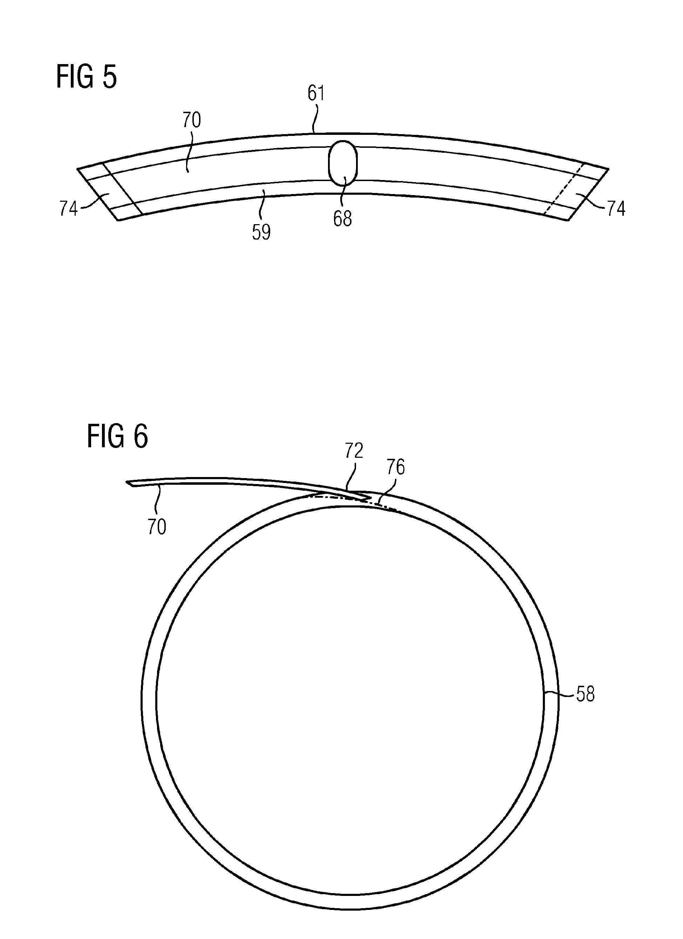

Das radial nach außen weisende Ende 61 der Dichtspitze 60 ist spitz zulaufend. Die Dichtspitze 60 ist nicht als einstückiger Ring ausgebildet, sondern umfasst mehrere bogenförmige Dichtspitzensegmente 70. Die Seitenansicht eines der Dichtspitzensegmente 70 ist in Figur 5 dargestellt.

An den äußeren Flächen der Dichtungsarmabschnitte 46, 48 sind zudem in entsprechender Anzahl zu den Segmenten 70 Nocken 64 vorgesehen. In den Nocken 64 sitzen Bolzen 66, die in ein Langloch 68 (siehe Figur 5) des Segments 70 eingreifen und eine größere Relativbewegung der Dichtspitzensegmente 70 in Umfangsrichtung verhindern. Die jeweiligen Segmentenden 74 sind in halber Materialstärke ausgebildet, so dass aneinanderliegende Dichtspitzensegmente 70 geringfügig in Tangentialrichtung gesehen überlappen und somit in axialer Projektion einen geschlossenen Dichtspitzenring bilden können.

Unter Fliehkraft streben die einzelnen Dichtspitzensegmente 70 nach außen. Aufgrund der geometrisch abgestimmten Schwalbenschwanzformen gelangen die Dichtspitzen 60 in der Nut 58 zum Anliegen (Figur 4). Der Radialspalt zwischen dem äußersten Ende 61 der Dichtspitze 60 und der dieser gegenüberliegenden, nach innen weisenden Dichtfläche des U-Rings 56 - die den statorseitigen Dichtungspartner des Dichtsystems 50 darstellt - ist dadurch minimiert, so dass einander benachbarte Räume dauerhaft und zuverlässig gegeneinander abgedichtet sind. Die Geometrien von Nut 58 und Dichtspitze 60 sind so aufeinander abgestimmt, dass insbesondere bei stationären Betriebsbedingungen es nicht zu einem Anstreifen kommt.

Figur 6 zeigt schematisch im Querschnitt die endlose Nut 58 mit einer seitlich dazu angeordneten Einführöffnung 72. Die Einführöffnung 72 geht in einen schraubenmäßig angestellten Kanal 76 über, der in der Nut 58 mündet. Darüber können die Dichtspitzensegmente 70 sukzessive in die Nut 58 eingefädelt und bei der Demontage entnommen werden. Mit dem Dichtsystem 50 ist es möglich, den Rotorinnenraum 54 zuverlässig und langlebig gegenüber den Seitenräumen 67, 69 abzudichten.

Auch ist es möglich, mehrere Dichtspitzenringe an jedem Dichtungsarmabschnitt 46, 48 anzuordnen.

Insgesamt betrifft die Erfindung somit ein Dichtsystem 50 für eine Gasturbine 10, mit einem Stator und einem Rotor 14, die einen Ringspalt bildend axial überlappen und dort zumindest eine Labyrinthdichtung mit einem rotorseitigen Dichtungspartner und einem statorseitigen Dichtungspartner aufweist, wobei der rotorseitige Dichtungspartner einen Überlappungsabschnitt zumindest eine sich in Umfangsrichtung erstreckende Dichtspitze 60 aufweist. Um eine besonders langlebige und einfach wiederaufbereitbare Labyrinthdichtung anzugeben, ist vorgesehen, dass die Dichtspitze 60 am Rotor 14 radial beweglich gelagert ist.

## Patentansprüche

1. Dichtsystem (50) für eine Gasturbine (10),
mit einem Rotor (14) und einem diesen umgebenden Stator, die einen Ringspalt bildend axial überlappen und dort zumindest eine Labyrinthdichtung mit einem rotorseitigen Dichtungspartner und einem statorseitigen Dichtungspartner aufweist,
wobei der rotorseitige Dichtungspartner im Überlappungsabschnitt zumindest eine sich in Umfangsrichtung erstreckende Dichtspitze (60) zur Abdichtung des Ringspalts aufweist, **dadurch gekennzeichnet,**
**dass** die Dichtspitze (60) am Rotor (14) radialbeweglich gelagert ist.

2. Dichtsystem (50) nach Anspruch 1,
bei dem der Rotor (14) im Überlappungsabschnitt zwei axial aneinanderliegende Rotorkomponenten mit jeweils einem auf die gegenüberliegende Rotorkomponente gerichteten Dichtungsarmabschnitt (46, 48) umfasst, und
dass an jedem Dichtungsarmabschnitt (46, 48) zumindest eine radialbewegliche Dichtspitze (60) angeordnet ist.

3. Dichtsystem (50) nach Anspruch 1 oder 2,
bei dem die Dichtspitze (60) in einer in der Rotormantelfläche angeordneten Nut (58) eingebracht ist.

4. Dichtsystem (50) nach Anspruch 3,
bei dem die Nut (58) schwalbenschwanzförmig und die Dichtspitze (60) nutseitig dazu korrespondierend ausgestaltet ist.

5. Dichtsystem (50) nach Anspruch 4,
bei dem rotormantelseitig eine zur Nut (58) axial benachbarte Einführöffnung (72) vorgesehen ist, die in der Nut (58) mündet.

6. Dichtsystem (50) nach einem der vorangehenden Ansprüche, bei die die Dichtspitze (60) segmentiert ausgeführt und gegen eine Verschiebung in Umfangsrichtung gesichert ist.

7. Gasturbine (10) mit einem Dichtsystem nach einem der vorangehenden Ansprüche.
